# EUROPEAN PATENT SPECIFICATION

(11) **EP 1 621 063 B1**
(45) Date of publication and mention of the grant of the patent: **20.02.2008**
(21) Application number: 05106641.3
(22) Date of filing: 20.07.2005
(51) Int. Cl.: A01D 46/26

(54) **Tool for beating olives or other similar agricultural products**
Erntegerät insbesondere für Oliven oder dergleichen landwirtschaftlichen Produkte
Outil moissonneur en particulier pour des olives ou produits agricoles similaires

(30) Priority: 30.07.2004 IT PD20040204
(43) Date of publication of application: 01.02.2006
(73) Proprietor: ZANON S.R.L., 35011 Campodarsego (Padova) (IT)
(72) Inventor: ZANON, Franco, 35011, CAMPODARSEGO (IT)
(74) Representative: Modiano, Micaela Nadia

(56) References cited:
- EP-A- 0 938 839
- EP-A- 1 051 899
- EP-A- 1 116 432
- EP-A- 1 175 823
- EP-A- 1 273 222
- CH-A- 639 530
- GB-A- 433 238

## Description

The present invention relates to an agricultural tool for beating olives or other similar agricultural products.

Olive beating is a technique known since antiquity, which consists in shaking the foliage of olive trees with the aid of simple rake-like tools.

In more recent years, the beating of olives or of other similar products has been automated partially by means of tools which, although the variety of embodiments, all comprise two mutually opposite oscillating sectors connected to actuation means, to each of which a corresponding series of rods arranged in a rack-like configuration is fixed.

Generally, the series of rods of the mutually opposite sectors are mutually offset.

These series of rods, in a condition of continuous opening and closure, beat the olives, thus allowing to collect them on the ground.

This beating tool generally also comprises a maneuvering pole, which is often telescopic and at one end of which the oscillating sectors and the corresponding actuation means are provided.

In the most advanced forms of beating tool, said actuation means are constituted by pneumatic cylinders, which are functionally connected, for example by means of a duct arranged inside the maneuvering pole, to a compressor which is connected to the pole by means of a flexible hose.

Examples of beating tools of this kind are disclosed for example in the following patents, all of which are in the name of the same Applicant as the present application: Italian patents 1,306,657, 1,306,658, 1,306,661, 1,306,687.

These tools for beating olives or other similar agricultural products, while being commercially known and appreciated for many years now, have some limitations.

These limitations are linked essentially to the need to have a compressor on site in order to operate the tool.

Compressors are generally arranged on the ground and are associated with a diesel or petrol motor drive.

The operating flexibility of these beating tools is thus limited to the presence of the Diesel (or petrol) engine, and accordingly also to the presence of fuel therein.

Further, whenever the length of the hose that connects the compressor to the maneuvering pole does not allow to reach preset regions of the olive grove, it is necessary to move the compressor with the corresponding motor drive.

EF-1175823 discloses a tool as defined in the preamble of claim 1.

The aim of the present invention is to provide a tool for beating olives or other similar agricultural products which allows greater freedom of action of said tool.

Within this aim, an obj ect of the present invention is to provide a tool for beating olives or other similar agricultural products that allows easy movement of said tool in the region of use.

Another object of the present invention is to provide a tool for beating olives whose weight is light enough to ensure its easy maneuverability and avoids tiring the operator who uses it.

Another object of the present invention is to provide an olive beating tool that can be actuated by using energy sources which are easily available to the user.

Another object of the present invention is to provide a tool for beating olives that is constructively simple and reliable as a whole. Another object of the present invention is to provide a tool for beating olives or similar agricultural products that does not damage the plant structure on which the collection of agricultural products is performed.

This aim and these and other objects which will become better apparent hereinafter are achieved by a tool for beating olives or other similar agricultural products, as defined in claim 1

Further characteristics and advantages of the present invention will become better apparent from the following detailed description of an embodiment thereof, illustrated by way of non-limiting example in the accompanying drawings, wherein:
Figure 1 is a partially sectional front view of the upper part of a tool according to the invention in the first movement configuration (with the rods closed);
Figure 2 is a view of the same upper part of the tool of Figure 1 in a second movement configuration (with the rods open);

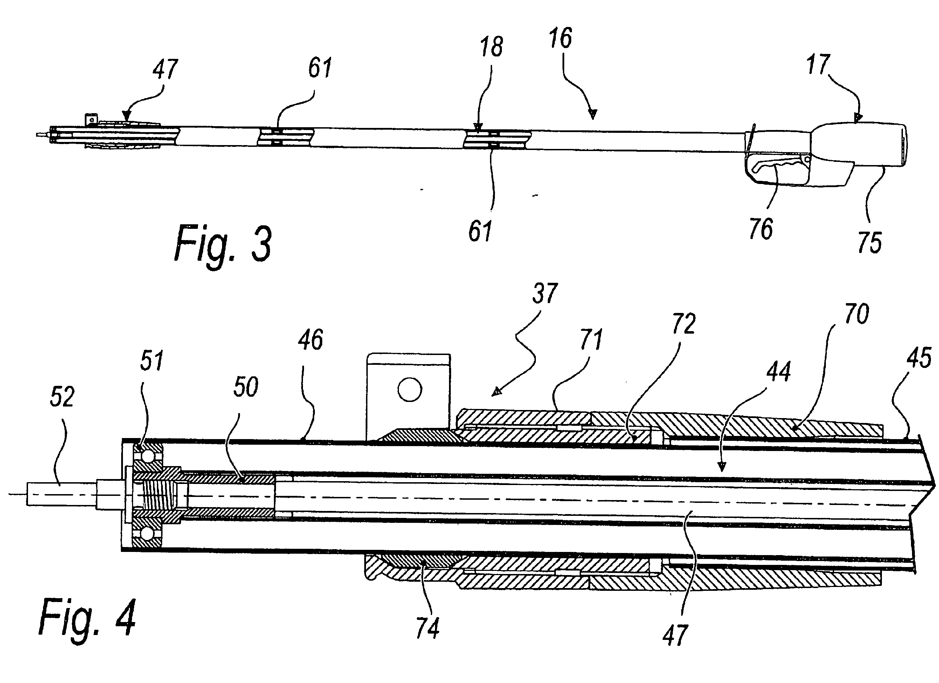

Figure 3 is a side view of the maneuvering pole of the tool according to the invention;
Figure 4 is a sectional enlarged-scale view of a detail of the upper portion of the maneuvering pole of Figure 3;

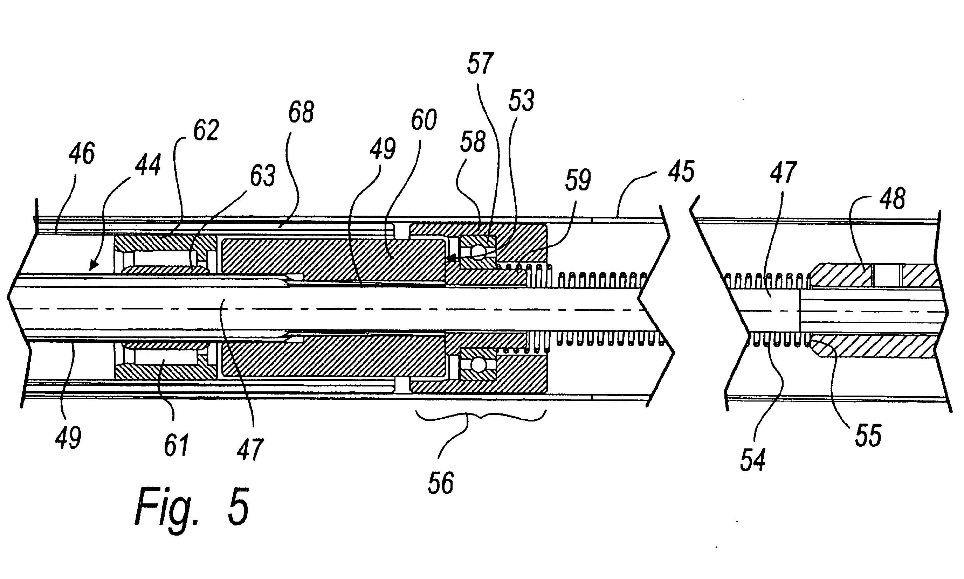

Figure 5 is a partially sectional enlarged-scale view of a detail of the maneuvering pole of Figure 3;

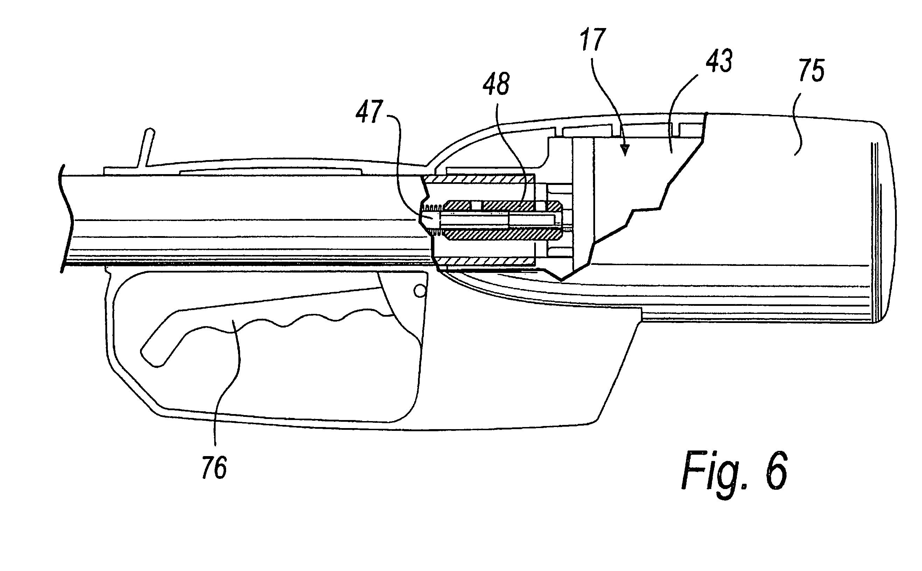

Figure 6 is a partially sectional enlarged-scale view of a detail of the lower portion of the maneuvering pole of Figure 3.

With reference to the figures, a tool for beating olives or other similar agricultural products according to the invention is generally designated by the reference numeral 10.

The olive beating tool 10 comprises a supporting body 11, to which two mutually opposite oscillating sectors 12 are articulated, a corresponding series of rods 13 being fixed in a rack-like configuration to each one of said sectors.

The figures illustrate only one rod for each series.

The oscillating sectors 12 are connected to oscillation actuation means 14, which are described hereafter.

The supporting body 11 is constituted for example by two half-shells 15 (only one of which is shown in the figures), which enclose part of the components of said tool.

The end of a maneuvering pole 16, which in this embodiment is of the telescopic type, is fixed to one end of the supporting body 11, which is the lower end with reference to the direction of use.

An electric motor drive 17 is provided at the opposite end of the maneuvering pole 16 and is connected by way of kinematic connection means 18 to the means 14 for actuating the oscillation of the oscillating sectors 12.

The maneuvering pole 16 and the kinematic connection means 18 will be described in greater detail hereinafter.

The oscillation actuation means 14 comprise a pusher 19, which is composed of two stems which perform a reciprocating translational motion in the same direction.

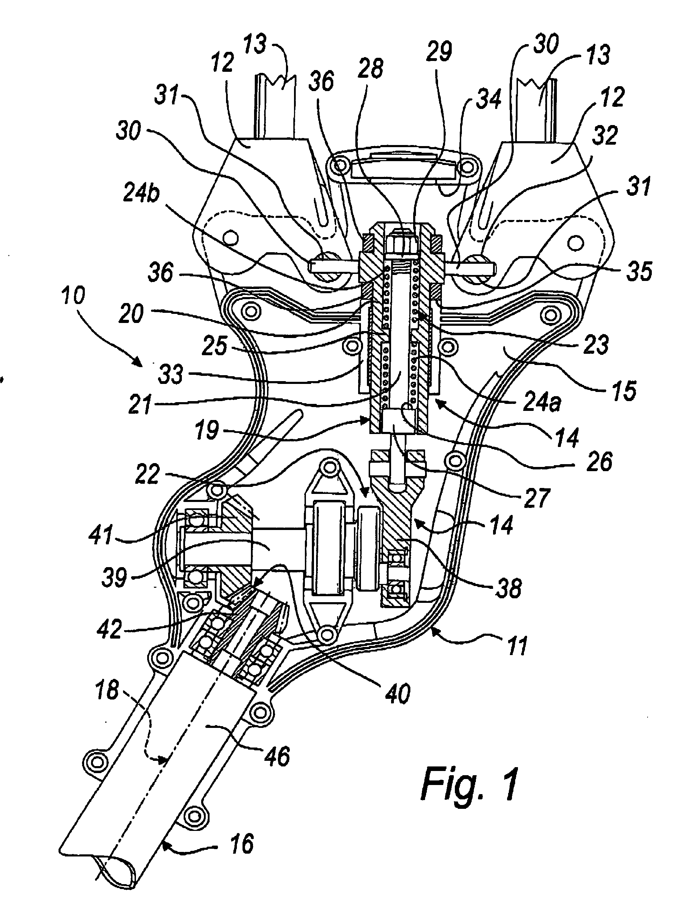

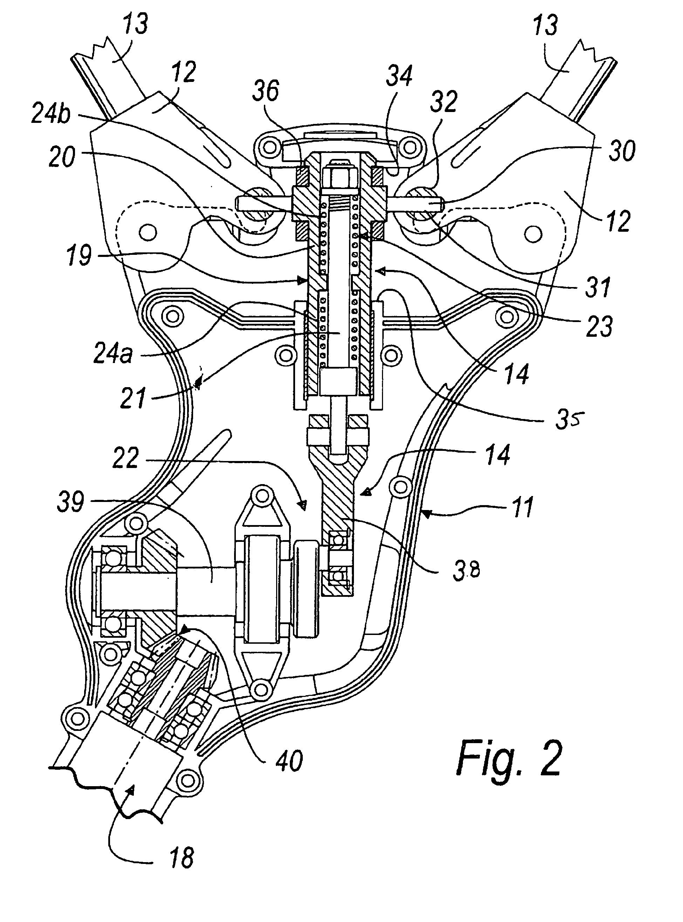

Of these moving stems, a first stem 20 is connected for movement to the oscillating sectors 12 and a second stem 21 is connected to a device for generating a rectilinear reciprocating motion 22, described hereinafter, which in turn is connected to the kinematic connection means 18, shown schematically in Figures 1 and 2, by means of an axis.

Elastically flexible means 23 are interposed between the first stem 20 and the second stem 21 and act in the direction of translational motion of the stems 20 and 21.

In particular, the second stem 21 is arranged coaxially and slidingly within the first stem 20.

The elastically flexible means 23 are constituted for example by two helical springs 24a and 24b arranged coaxially around the second stem 21.

Of these helical springs, the first spring 24a is arranged between the side of a shoulder 25 formed inside the first stem 20 and a first abutment 26 formed on the tail 27 of the second stem 21, related to the connection to the kinematic connection means 18.

The second helical spring 24b is arranged between the opposite side of the shoulder 25 and a second abutment 28 formed on the head of the first stem 20 formed by a female thread 29, which is coupled to the corresponding thread provided on the second stem 21.

Two pivots 30 protrude from the outer side of the first stem 20, on mutually opposite sides, and are coupled slidingly in corresponding seats 31 formed transversely on corresponding rotor elements 32, each of which is rotatably coupled to one of the two oscillating sectors 12. In practice, the pivots 30 and the rotor elements 32 form a sliding hinge.

The first stem 20 is advantageously kept guided by a bush 33 formed by the two half-shells 15.

The upper stroke limit 34 and the lower stroke limit 35 for the pusher 19 are also provided on the supporting body 11 and are constituted by the upper end of the bush and by an abutment formed on a plate which is applied to the supporting body 11.

Shock-absorbing means are associated with the pusher 19 and are constituted for example by two rings 36 made of elastomeric material, which are arranged coaxially with respect to the first stem 20 respectively on opposite sides relative to the pivots 30 of the sliding hinge.

The elastomeric rings 36 abut against the stroke limits 34 and 35.

In particular, the device 22 for generating a rectilinear reciprocating motion is constituted by a linkage 38, which is pivoted respectively to the second stem 21 and eccentrically to a shaft 39, which is associated coaxially with a bevel gear pair 40 connected to the kinematic connection means 18.

The bevel gear pair 40 is constituted by a bevel gear 41, which is keyed to the shaft 39, and by a pinion 42, which is oriented coaxially with respect to the maneuvering pole 16.

The electric motor drive 17 is provided at the opposite end of the maneuvering pole 16 and is constituted by an electric motor 43 of a commercially available type.

In this embodiment, the electric motor drive 17 can be connected to an independent power source (not shown in the figures for the sake of simplicity), such as for example a 12- or 24-volt battery, such as the battery of a car, of a tractor or of a truck.

The electric motor 43 can also be connected by means of electrical cables (not shown in the Figures) directly to one of these vehicles, or in any case to alternative electric power sources.

The electric motor 43 is connected to the device 22 for generating rectilinear reciprocating motion by means of a transmission shaft 44.

In particular, the maneuvering pole 16, as mentioned, is telescopic.

Such rod comprises a first tubular element 45, which is associated with the electric motor 43 at one end.

A second tubular element 46 is coupled to the first tubular element 45 coaxially and slidingly and is associated at one end with the supporting body 11.

Further, the telescopic rod 16 comprises connecting means 37 for associating the first tubular element 45 with the second tubular element 46, locking them to each other in any mutual sliding position.

The transmission shaft 44 is arranged coaxially and internally with respect to the second tubular element 46 and connects the electric motor 43 to the device 22 for generating rectilinear reciprocating motion.

The transmission shaft 44 is also telescopic and comprises a first rod-like body 47, which has for example a square cross-section and is fixed by means of a first connecting bush 48 to the driving shaft of the electric motor.

The first rod-like body 47 is inserted slidingly within a second tubular rod-like body 49.

Such second rod-like body is fixed at one end to a second connecting bush 50, which is locked rotatably on the internal walls of the second tubular element 46, for example by way of a ball bearing 51.

A shank 52 for fixing to the pinion 42 of the bevel gear pair 40 is fixed to the end of the second connecting bush 50.

Further, the maneuvering pole 16 comprises means for preventing flexing, during rotation, for the transmission shaft 44.

Such flexing prevention means comprise for example elastic means 54, which are arranged between an abutment 55, which is rigidly coupled to the first rod-like body 47, such as for example the end of the first connecting bush 48, and a rotation support assembly 56, which is arranged coaxially and slidingly on said first rod-like body.

The rotation supporting assembly 56 is pushed in abutment against the end 53 of the second rod-like body 49 that is superimposed on the first rod-like body 47.

The rotation supporting assembly 56 is constituted for example by a ball bearing 57, which is arranged between an outer bush 58, which is inserted slidingly in the first tubular element 45, and an inner bush 59, which is coupled slidingly to the first rod-like body 47.

The elastic means 54 are constituted for example by a helical spring, which is coaxial to the first rod-like body 47 and is arranged in abutment against the first connecting bush 48 by one end and against the ball bearing 57, locked between the bottom of the outer bush 58 and a shoulder formed on the inner bush 59, by the opposite end.

A sleeve 60 is fixed externally to the end 53 of the second rod-like body 49 and acts as an abutment for the rotation supporting assembly 56.

The means for preventing the flexing of the transmission shaft 44 during rotation further comprise three idle rollers 61, which are arranged between the second rod-like body 49 and the second tubular element 46.

An outer ring 62, which is fixed with respect to the second tubular element 46, and an inner ring 63, which is keyed to the second rod-like body 49, is associated with each idle roller 61.

A bush 68 for spacing the first tubular element 45 and the second tubular element 46 is provided at the end of the second tubular element that lies inside the first tubular element 45.

The previously mentioned connecting means 37 are of a substantially known type, for example such as the ones disclosed in Italian patent 1,306,661 in the name of the same Applicant.

The connecting means 37 comprise three mutually associated annular elements.

A first annular element 70 is rigidly coupled to the first tubular element 45 and the second annular element 71 acts as a threaded coupling between the first annular element 70 and the third annular element 72, which is coupled slidingly on the second tubular element 46.

The first annular element 70 is threaded internally in order to mate with the second annular element 72 (which as mentioned acts as a threaded coupling), which in turn engages, by means of a thread, the third annular element 72, which surrounds part of the second tubular element 46.

A ring 74 made of elastomeric material and provided with frustum-shaped ends is arranged internally between the second annular element 71 and the third annular element 72.

The screwing and unscrewing of the first annular element 70 or of the third annular element 72 with respect to the other element compresses to a greater or smaller extent the elastomeric ring 74 against the outer surface of the second tubular element 46 in order to lock its sliding.

The electric motor drive 17 is enclosed by an enclosure 75 arranged at the end of the maneuvering pole.

An actuation lever 76 for the electric motor 43 is associated with the enclosure 75 and is functionally connected to a microswitch (not shown in the figures) for switching on and off the electric motor 43.

The operation of the invention is as follows.

First of all, the length of the maneuvering pole 16 is adjusted according to requirements.

This is done by acting on the means 37 for connecting the first tubular element 45 on the second tubular element 46.

After the connecting means 37 have been loosened, it is possible to slide the second tubular element 46 toward the outside of the first tubular element 45, thus extending the maneuvering pole 16.

Accordingly, the second rod-like element 49 slides on the first rod-like element 47, consequently extending the transmission shaft 44.

In order to avoid flexing of the transmission shaft 44, the rotation supporting assembly 56 is kept in contact against the end 53 of the second rod-like body 49.

This is achieved by way of the elastic means 54, which keep it pushed against the second rod-like body 49.

Further, the elastic means 54 facilitate the extension of the maneuvering pole 16, since they act in the extension direction.

Once the maneuvering pole 16 has been configured according to the appropriate length, the electric motor 43 is activated by acting on the lever 76 and, by way of the transmission shaft 44, transfers the rotary motion to the bevel gear pair 40, which transfers it to the shaft 39 provided inside the supporting body 11.

The rotation of the shaft 39 produces the eccentric rotation of the linkage 38, which in turn is connected to the pusher 19.

The reciprocating motion of the linkage 38 causes the pusher 19 to perform a rising and descending reciprocating motion.

The pivots 30 of the pusher 19 slide within the corresponding receptacles 31 formed in the rotary elements 32 for pivoting to the oscillating sectors 12.

The rising motion of the pusher 19 therefore allows the oscillating sectors 12 to open outward, whereas a descending motion of the pusher 19 returns the oscillating sectors 12 toward the inside (reference should be made to the two Figures 1 and 2).

A continuous reciprocating motion of the pusher 19 causes the sectors 12 to perform oscillations about their pivoting axis with respect to the supporting body 11.

The oscillating motion of the sectors 12 and accordingly of the corresponding rods 13 allows the rods 13 to move the foliage of the tree on which the olives or similar agricultural products are present.

Advantageously, the elastically flexible means 23 interposed between the first and second stems 20 and 21 that form the pusher 19 allow the rods 13 and the oscillating sectors 12 to reduce their rigidity, thus avoiding damage to the foliage.

The impact of the rods 13 against the foliage is in fact "cushioned" by the elastically flexible means 23.

In practice it has been found that the invention thus described overcomes the limitations noted in tools for beating olives or similar agricultural products.

In particular, the present invention provides a tool for beating olives that can have greater freedom of movement with respect to known types of beating tool.

The use of an electric motor as a power source for the means for actuating the oscillation of the oscillating sectors that support the rods allows to use independent and autonomous power sources, such as for example the batteries of a car or of a tractor or other electrical means.

Further, the use of elastically flexible means in combination with the pusher of the oscillation actuation means allows to reduce the risk of damage to the branches on which the olives are present.

The structure of the described tool according to the invention is further extremely simplified and compact with respect to other beating tool structures.

Moreover, by way of the device for extending the transmission shaft of the maneuvering pole it has been possible to allow said maneuvering pole to be telescopic.

The invention thus conceived is susceptible of numerous modifications and variations, all of which are within the scope of the appended claims; further, all the details may be replaced with other technically equivalent elements.

In practice, the materials employed, so long as they are compatible with the specific use, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A tool for beating olives or other similar agricultural products, of the type that comprises two mutually opposite oscillating sectors (12) articulated to a supporting body (11), a corresponding series of rods (13) being fixed in a rack-like configuration to each one of said sectors, both of said oscillating sectors (12) being connected to oscillation actuation means (14), and means (18) for the kinematic connection of said oscillation actuation means (14) to an electric motor drive (17), **characterized in that** said oscillation actuation means (14) comprise a pusher (19), which is composed of a first and second stems (20, 21), which perform a reciprocating translational motion along the same direction and between which elastically flexible means (23) are interposed, a first one of said stems (20) being connected for movement to said oscillating sectors (12), the second of said stems being associated for movement with said means (18) for cinematic connection to/k said electric motor drive (17).

2. The tool according to claim 1, **characterized in that** said elastically flexible means (23) comprise two helical springs (24a, 24b), which are arranged coaxially around said second stem (21), the first spring (24a) of said helical springs being arranged between the side of a shoulder (25) formed inside said first stem (20) and a first abutment (26) formed on the tail (27) of said second stem (21), related to the connection to said kinematic connection means (18), the second helical spring (24b) being arranged between the opposite side of said shoulder (25) and a second abutment (28) formed on the end of the first stem (20).

3. The tool according to claim 1 or 2, **characterized in that** two pivots (30) protrude on mutually opposite sides from the outer side of said first stem (20) and are coupled slidingly in corresponding seats (31) formed transversely on corresponding rotor elements (32), each of which is rotationally coupled to one of said two oscillating sectors (12).

4. The tool according to keel claim 3, **characterized in that** the upper stroke limit (34) and the lower stroke limit (35) for said pusher (19) are formed on said supporting body (11), shock-absorbing means being associated with said pusher, such as two elastomeric rings (36) arranged coaxially to said first stem (20) respectively on opposite sides with respect to said pivots (30), which abut against said upper stroke limit (34) and said lower stroke limit (35).

5. The tool according to claim 1, **characterized in that** said oscillation actuation means (14) comprise a device (22) for generating a rectilinear reciprocating motion, which is interposed between said kinematic connection means (18) and said second stem (21).

6. The tool according to claim 5, **characterized in that** said device (22) for generating rectilinear reciprocating motion comprises a linkage (38), which is pivoted respectively to said second stem (21) and eccentrically to a shaft (39), which is associated coaxially with a bevel gear pair (40), which is connected to said means (18) for kinematic connection to said electric motor drive (17).

7. The tool according to one or more of the preceding claims, **characterized in that** it comprises a telescopic maneuvering pole (16).

8. The tool according to claim 5, **characterized in that** said electric motor drive (17) comprises an electric motor (43), which is arranged at the end of a maneuvering pole (16), said kinematic connection means (18) comprising at least one transmission shaft (44), which is functionally connected to said electric motor (43) and to said mechanism for generating rectilinear reciprocating motion (22).

9. The tool according to claim 8, **characterized in that** said maneuvering pole (16) is telescopic and comprises
- a first tubular element (45), which is associated at the end with said motor drive (17),
- a second tubular element (46), which is associated at the end with said supporting body (11) and is coupled coaxially and slidingly with said first tubular element (45),
- connecting means (37) for associating said first tubular element (45) with said second tubular element (46), locking them to each other in any mutual sliding position,
and further comprising a telescopic transmission shaft (44), which is inserted in said second tubular element (46), to be connected to said motor drive (17) and to said supporting body (11).

10. The tool according to claims 8 and 9, **characterized in that** said telescopic transmission shaft (44) comprises a first rod-like body (47), which is inserted slidingly in a second tubular rod-like body (49), said rod-like bodies (47, 49) being associable at the end respectively with said motor drive (17) and with said tool, said telescopic maneuvering pole (16) further comprising means for preventing the flexing of said transmission shaft (44) during rotation.

11. The tool according to claim 10, **characterized in that** said means for preventing flexing comprise elastic means (54), which are arranged between an abutment (55), formed monolithically with said first rod-like body (47), and a rotation supporting assembly (56), which is arranged coaxially and slidingly on said first rod-like body (47), said rotation supporting assembly (56) being pushed into abutment against the end (53) of said second rod-like body (49) which is superimposed on said first rod-like body (47).

12. The tool according to claim 11, **characterized in that** said rotation supporting assembly (56) comprises a ball bearing (57), which is arranged between an outer bush (58), which is inserted slidingly within said first tubular element (45), and an inner bush (59), which is slidingly coupled to said first rod-like body (47).

13. The tool according to claim 12, **characterized in that** a sleeve (60) is fixed externally to the end (53) of said second rod-like body (49) and acts as an abutment for said rotation supporting assembly (56).

14. The tool according to one or more of claims 10 to 13, **characterized in that** said means for preventing the flexing of the transmission shaft (44) during rotation comprise at least one idle roller (61), which is arranged between said second rod-like body (49) and said second tubular element (46), an outer ring (62) and an inner ring (63) being associated with said at least one idle roller (61), said outer ring (62) being fixed with respect to said second tubular element (46), said inner ring (63) being keyed on said second rod-like body (49).

15. The tool according to one or more of claims 9 to 14, **characterized in that** a bush (68) for spacing said first tubular element (45) and said second tubular element (46) is present at the end of said second tubular element that lies inside said first tubular element (45).

16. The tool according to one or more of claims 9 to 15, **characterized in that** said connecting means (37) comprise three mutually associated annular elements, a first one (70) of said three annular elements being rigidly coupled to said first tubular element (45), a second one (71) of said annular elements acting as a threaded coupling between said first annular element (70) and the third annular element (72), which is coupled slidingly on said second tubular element (46), said first annular element (70) being threaded internally in order to couple to said second annular element (71), which engages by means of a thread said third annular element (72), which surrounds part of said second tubular element (46), a ring (74) made of elastomeric material and provided with frustum-shaped ends being arranged internally between said second annular element (71) and said third annular element (72).

17. The tool according to one or more of claims 10 to 16, **characterized in that** said second rod-like body (49) is fixed at one end to a second connecting bush (50), which is locked rotatably on the internal walls of said second tubular element (46), a shank (52) for fixing to the pinion (42) of said bevel gear pair (40) being fixed at the end of said second connecting bush (50),

18. The tool according to one or more of the preceding claims, **characterized in that** said electric motor drive (17) has an autonomous power source.

19. The tool according to claim 18, **characterized in that** said autonomous power source is a 12- or 24-volt battery.

20. The tool according to claim 7, **characterized in that** said electric motor drive (17) is enclosed by an enclosure (75) arranged at the end of said maneuvering pole (16), an actuation lever (76) for said electric motor drive (17) being associated with said enclosure (75), said lever being functionally connected to a microswitch for switching on and off said electric motor drive (17).

## Patentansprüche

1. Ein Emtegerät insbesondere für Oliven oder dergleichen landwirtschaftlichen Produkte, vom Typ, das zwei gegenseitig gegenüberliegende Schwingsektoren (12), die an einen Tragkörper (11) angelenkt sind, wobei eine korrespondierende Stangenreihe (13) in einer gestellartigen Konfiguration an jedem der Sektoren befestigt ist, wobei beide der Schwingsektoren (12) mit Schwingbetätigungsmitteln (14) verbunden sind, und Mittel (18) für die kinematische Verbindung der Schwingbetätigungsmittel (14) mit einem Elektromotorantrieb (17) umfasst, **dadurch gekennzeichnet, dass** die Schwingbetätigungsmittel (14) einen Schieber (19) umfassen, der aus einem ersten und zweiten Schaft (20, 21) besteht, die eine hin- und hergehende Fortschreitungsbewegung in der gleichen Richtung ausführen und zwischen denen elastisch flexible Mittel (23) eingefügt sind, wobei ein Erster der Schäfte (20) zur Bewegung mit den Schwingsektoren (12) verbunden ist, wobei der Zweite der Schäfte zur Bewegung mit den Mitteln (18) zur kinematischen Verbindung mit dem Elektromotorantrieb (17) assoziiert ist.

2. Das Gerät gemäß Anspruch 1, **dadurch gekennzeichnet, dass** die elastisch flexiblen Mittel (23) zwei schraubenförmige Federn (24a, 24b) umfassen, welche koaxial um den zweiten Schaft (21) angeordnet sind, wobei die erste Feder (24a) der schraubenförmigen Federn in Bezug auf die Verbindung mit den kinematischen Verbindungsmitteln (18) zwischen der innerhalb des ersten Schafts (20) ausgebildeten Seite einer Schulter (25) und einem ersten Widerlager (26), das am Ende (27) des zweiten Schafts (21) ausgebildet ist, angeordnet ist, wobei die zweite schraubenförmige Feder (24b) zwischen der gegenüberliegenden Seite der Schulter (25) und einem zweiten Widerlager (28), das am Ende des ersten Schafts (20) ausgebildet ist, angeordnet ist.

3. Das Gerät gemäß Anspruch 1 oder 2, **dadurch gekennzeichnet, dass** zwei Gelenke (30) an gegenseitig gegenüberliegenden Seiten von der Außenseite des ersten Schafts (20) herausragen und in korrespondierenden Sitzen (31) gleitend gekoppelt sind, die quer an korrespondierenden Rotorelementen (32) ausgebildet sind, von dem jedes drehbar mit einem der zwei Schwingsektoren (12) verbunden ist.

4. Das Gerät gemäß Anspruch 3, **dadurch gekennzeichnet, dass** die obere Hubbegrenzung (34) und die untere Hubbegrenzung (35) für den Schieber (19) auf dem Tragkörper (11) ausgebildet sind, wobei stoßdämpfende Mittel mit dem Schieber assoziiert sind, wie zwei elastomere Ringe (36), die koaxial an dem ersten Schaft (20) beziehungsweise auf gegenüberliegenden Seiten in Bezug auf die Gelenke (30) angeordnet sind, welche gegen die obere Hubbegrenzung (34) und die untere Hubbegrenzung (35) anschlagen.

5. Das Gerät gemäß Anspruch 1, **dadurch gekennzeichnet, dass** die Schwingbetätigungsmittel (14) eine Vorrichtung (22) zum Erzeugen einer geradlinigen Hin- und Herbewegung umfassen, welche zwischen dem kinematischen Verbindungsmittel (18) und dem zweitem Schaft (21) eingefügt ist.

6. Das Gerät gemäß Anspruch 5, **dadurch gekennzeichnet, dass** die Vorrichtung (22) zur geradlinigen Hin- und Herbewegungserzeugung ein Gestänge (38) umfasst, welches drehbar an dem zweitem Schaft (21) beziehungsweise außermittig an einer Welle (39) gelagert ist, welche koaxial mit einem Kegelradpaar (40) assoziiert ist, das mit den Mitteln (18) zur kinematischen Verbindung mit dem Elektromotorantrieb (17) verbunden ist.

7. Das Gerät gemäß einem oder mehreren der vorhergehenden Ansprüche, **dadurch gekennzeichnet, dass** es eine Teleskopbedienungsstange (16) umfasst.

8. Das Gerät gemäß Anspruch 5, **dadurch gekennzeichnet, dass** der Elektromotorantrieb (17) einen Elektromotor (43) umfasst, der am Ende einer Bedienungsstange (16) angeordnet ist, die kinematischen Anschlußmittel (18) mindestens eine Getriebewelle (44) umfassend, die funktionell mit dem Elektromotor (43) und dem Mechanismus zur geradlinigen Hin- und Herbewegungserzeugung (22) verbunden ist.

9. Das Gerät gemäß Anspruch 8, **dadurch gekennzeichnet, dass** die Bedienungsstange telskopisch ist und folgendes umfasst
- ein erstes röhrenförmiges Element (45), welches am Ende mit dem Motorantrieb (17) assoziiert ist,
- ein zweites röhrenförmiges Element (46), welches am Ende mit dem Tragkörper (11) assoziiert ist und mit dem ersten röhrenförmigen Element (45) koaxial und gleitend verbunden ist,
- Verbindungsmittel (37) zum Assoziieren des ersten röhrenförmigen Elements (45) mit dem zweiten röhrenförmigen Element (46), sie in jeder wechselseitig gleitenden Position miteinander verriegelnd,
und weiter eine Teleskopantriebswelle (44) umfassend, welche in das zweite röhrenförmige Element (46) eingesetzt ist, die mit dem Motorantrieb (17) und dem Tragkörper (11) zu verbinden ist.

10. Das Gerät gemäß den Ansprüchen 8 und 9, **dadurch gekennzeichnet, dass** die Teleskopantriebswelle (44) einen ersten stangenartigen Körper (47) umfasst, der gleitend in einen zweiten röhrenförmigen stangenartigen Körper (49) eingefügt ist, wobei die stangenartigen Körper (47, 49) am Ende mit dem Motorantrieb (17) beziehungsweise mit dem Gerät assoziierbar sind, die Teleskopbedienungsstange (16) weiter Mittel zur Verhinderung des Durchbiegens der Antriebswelle (44) beim Rotieren umfassend.

11. Das Gerät gemäß Anspruch 10, **dadurch gekennzeichnet, dass** die Mittel zur Durchbiegeverhinderung elastische Mittel (54) umfassen, welche zwischen einem Anschlag (55), der monolithisch mit dem ersten stangenartigen Körper (47) ausgebildet ist, und einer Rotationsstützanordnung (56) angeordnet sind, die koaxial und gleitend auf dem ersten stangenartigen Körper (47) angeordnet ist, wobei die Rotationsstützanordnung (56) auf Stoß gegen das Ende (53) des zweiten stangenartigen Körper (49) der dem erstem stangenartigen Körper (47) überlagert ist, eingeschoben ist.

12. Das Gerät gemäß Anspruch 11, **dadurch gekennzeichnet, dass** die Rotationsstützanordnung (56) ein Kugellager (57) umfasst, das zwischen einer äußeren Muffe (58) angeordnet ist, die gleitend innerhalb des ersten röhrenförmigen Elements (45) eingesetzt ist, und einer inneren Muffe (59), die gleitend mit dem ersten stangenartigen Körper (47) verbunden ist.

13. Das Gerät gemäß Anspruch 12, **dadurch gekennzeichnet, dass** eine Hülse (60) außenseitig am Ende (53) des zweiten stangenartigen Körpers (49) befestigt ist und als Anschlag für die Rotationsstützanordnung (56) wirkt.

14. Das Gerät gemäß einem oder mehreren der Ansprüche 10 bis 13, **dadurch gekennzeichnet, dass** die Mittel zum Verhindern der Durchbiegung der Antriebswelle (44) beim Rotieren mindestens eine Zwischenrolle (61) umfassen, welche zwischen dem zweiten stangenartigen Körper (49) und dem zweiten röhrenförmigen Element (46) angeordnet ist, wobei ein äußerer Ring (62) und ein innerer Ring (63) mit der mindestens einen Zwischenrolle (61) assoziiert ist, wobei der äußere Ring (62) in Bezug auf das zweite röhrenförmige Element (46) feststehend ist, und wobei der innere Ring (63) auf dem zweiten stangenartigen Körper (49) verkeilt ist.

15. Das Gerät gemäß einem oder mehreren der Ansprüche 9 bis 14, **dadurch gekennzeichnet, dass** eine Hülse (68) zur Beabstandung des ersten röhrenförmigen Elements (45) und des zweiten röhrenförmigen Elements (46) an dem Ende des zweiten röhrenförmigen Elements vorhanden ist, das innerhalb des ersten röhrenförmigen Elements (45) liegt.

16. Das Gerät gemäß einem oder mehreren der Ansprüche 9 bis 15, **dadurch gekennzeichnet, dass** die Verbindungsmittel (37) drei gegenseitig assoziierte ringförmige Elemente umfassen, wobei ein Erstes (70) der drei ringförmigen Elemente fest mit dem ersten röhrenförmigen Element (45) verbunden ist, ein Zweites (71) der ringförmigen Elemente als eine Schraubverbindung zwischen dem ersten ringförmige Element (70) und dem dritten ringförmigen Element (72) wirkt, welches auf dem zweiten röhrenförmigen Element (46) gleitend verbunden ist, wobei das erste ringförmige Element (70) innen ein Gewinde aufweist, um an das zweite ringförmige Element (71) anzukoppeln, welches das dritte ringförmige Element (72) mittels eines Gewindes eingreift, welches einen Teil des zweiten röhrenförmigen Elements (46) umgibt, wobei ein Ring (74), hergestellt aus elastomerem Material und bereitgestellt mit kegelstumpfartigen Enden, innen zwischen dem zweiten ringförmigen Element (71) und dem dritten ringförmigen Element (72) angeordnet ist.

17. Das Gerät gemäß einem oder mehreren der Ansprüche 10 bis 16, **dadurch gekennzeichnet, dass** der zweite stangenartige Körper (49) an einem Ende an einer zweiten Verbindungsmuffe (50) befestigt ist, welche an den inneren Wänden des zweiten röhrenförmigen Elements (46) drehend verriegelt ist, wobei ein Schaft (52) zur Fixierung am Zahnrad (42) des Kegelzahnradpaares (40) am Ende der zweiten Verbindungsmuffe (50) befestigt ist.

18. Das Gerät gemäß einem oder mehreren der vorhergehenden Ansprüche, **dadurch gekennzeichnet, dass** der Elektromotorantrieb (17) eine autonome Energiequelle aufweist.

19. Das Gerät gemäß Anspruch 18, **dadurch gekennzeichnet, dass** die autonome Energiequelle eine 12- oder 24-Volt Batterie ist.

20. Das Gerät gemäß Anspruch 7, **dadurch gekennzeichnet, dass** der Elektromotorantrieb (17) von einem am Ende der Bedienungsstange (16) angeordneten Gehäuse (75) umschlossen ist, wobei ein Schalthebel (76) für den Elektromotorantrieb (17) mit dem Gehäuse (75) assoziiert ist, wobei der Hebel funktionell mit einem Mikroschalter zum Ein- und Ausschalten des Elektromotorantriebs (17) verbunden ist.

## Revendications

1. Outil pour le gaulage des olives ou d'autres produits agricoles similaires, du type qui comprend deux secteurs (12) oscillants mutuellement opposés articulés à un corps de support (11), une série correspondante de tiges (13) étant fixée dans une configuration en forme de crémaillère à chacun desdits secteurs, les deux secteurs oscillants (12) étant reliés à des moyens d'actionnement d'oscillation (14), et des moyens (18) pour la liaison cinématique desdits moyens d'actionnement d'oscillation (14) à un moteur d'entraînement électrique (17), **caractérisé en ce que** lesdits moyens d'actionnement d'oscillation (14) comprennent un poussoir (19), qui est composé d'une première et deuxième tiges (20, 21) qui réalisent un mouvement translationnel de va-et-vient le long de la même direction et entre lesquelles des moyens flexibles de façon élastique (23) sont interposés, une première desdites tiges (20) étant reliée pour son déplacement auxdits secteurs oscillants (12), la deuxième desdites tiges étant associée pour son déplacement auxdits moyens (18) pour la liaison cinématique audit moteur d'entraînement électrique (17).

2. Outil selon la revendication 1, **caractérisé en ce que** lesdits moyens flexibles de façon élastique (23) comprennent deux ressorts hélicoïdaux (24a, 24b), qui sont agencés coaxialement autour de ladite deuxième tige (21), le premier ressort (24a) desdits ressorts hélicoïdaux étant agencé entre le côté d'un épaulement (25) formé à l'intérieur de ladite première tige (20) et une première butée (26) formée sur la queue (27) de ladite deuxième tige (21), relativement à la liaison auxdits moyens cinématiques (18), le deuxième ressort hélicoïdal (24b) étant agencé entre le côté opposé dudit épaulement (25) et une deuxième butée (28) formée sur l'extrémité de ladite première tige (20).

3. Outil selon la revendication 1 ou 2, **caractérisé en ce que** deux pivots (30) font saillie sur des côtés mutuellement opposés depuis le côté externe de ladite première tige (20) et sont couplés de façon coulissante dans des sièges correspondants (31) formés transversalement sur des éléments rotor correspondants (32), chacun desquels est couplé de façon rotatoire à l'un desdits deux secteurs oscillants (12).

4. Outil selon la revendication 3, **caractérisé en ce que** le limiteur de course supérieur (34) et le limiteur de course inférieur (35) pour ledit poussoir (19) sont formés sur ledit corps de support (11), des moyens amortisseurs étant associés audit poussoir (19), tels que deux anneaux en élastomère (36) agencés coaxiaux à ladite première tige (20) respectivement sur des côtés opposés par rapport auxdits pivots (30), qui butent contre ledit limiteur de course supérieur (34) et ledit limiteur de course inférieur (35).

5. Outil selon la revendication 1, **caractérisé en ce que** lesdits moyens d'actionnement d'oscillation (14) comprennent un dispositif (22) pour générer un mouvement de va-et-vient rectilinéaire, qui est interposé entre lesdits moyens de liaison cinématiques (18) et ladite deuxième tige (21).

6. Outil selon la revendication 5, **caractérisé en ce que** ledit dispositif (22) pour générer un mouvement de va-et-vient rectilinéaire comprend une biellette (38), qui est articulée respectivement à ladite deuxième tige (21) et de façon excentrique à un arbre (39), qui est associé de façon coaxiale à un engrenage conique (40), qui est relié auxdits moyens (18) pour la liaison cinématique audit moteur d'entraînement électrique (17).

7. Outil selon une ou plusieurs des revendications précédentes, **caractérisé en ce qu'**il comprend une perche de manoeuvre télescopique (16).

8. Outil selon la revendication 5, **caractérisé en ce que** ledit moteur d'entraînement électrique (17) comprend un moteur électrique (43), qui est agencé au niveau de l'extrémité d'une perche de manoeuvre (16), lesdits moyens de liaison cinématique (18) comprenant au moins un arbre de transmission (44), qui est relié de façon fonctionnelle audit moteur électrique (43) et audit mécanisme de génération de mouvement de va-et-vient rectilinéaire (22).

9. Outil selon la revendication 8, **caractérisé en ce que** ladite perche de manoeuvre (16) est télescopique et comprend
- un premier élément tubulaire (45), qui est associé au niveau de l'extrémité audit moteur d'entraînement (17),
- un deuxième élément tubulaire (46), qui est associé au niveau de l'extrémité audit corps de support (11) et est couplé de façon coaxiale et coulissante audit premier élément tubulaire (45),
- des moyens de liaison (37) pour l'association dudit premier élément tubulaire (45) audit deuxième élément tubulaire (46), les verrouillant l'un à l'autre dans une quelconque position de coulissement mutuelle,
et comprenant en outre un arbre de transmission télescopique (44), qui est inséré dans ledit deuxième élément tubulaire (46), pour être relier audit moteur d'entraînement (17) et audit corps de support (11).

10. 0util selon les revendications 8 et 9, **caractérisé en ce que** ledit arbre de transmission télescopique (44) comprend un premier corps en forme de barre (47), qui est inséré de façon coulissante dans un deuxième corps en forme de barre tubulaire (49), lesdits corps en forme de barre (47, 49) étant associables au niveau de l'extrémité respectivement audit moteur d'entraînement (17) et audit outil, ladite perche de manoeuvre télescopique (16) comprenant en outre des moyens pour empêcher la flexion dudit arbre de transmission (44) lors de la rotation.

11. Outil selon la revendication 10, **caractérisé en ce que** lesdits moyens pour empêcher la flexion comprennent des moyens élastiques (54) qui sont agencés entre une butée (55), formée de façon monolithique avec ledit premier corps en forme de barre (47), et un ensemble de support de rotation (56) qui est agencé de façon coaxiale et coulissante sur ledit premier corps en forme de barre (47), ledit ensemble de support de rotation (56) étant poussé en butée contre l'extrémité (53) dudit deuxième corps en forme de barre (49) qui est superposé sur ledit premier corps en forme de barre (47).

12. Outil selon la revendication 11, **caractérisé en ce que** ledit ensemble de support de rotation (56) comprend un roulement à billes (57) qui est agencé entre un manchon externe (58), qui est inséré de façon coulissante à l'intérieur dudit premier élément tubulaire (45), et un manchon interne (59) qui est couplé de façon coulissante audit premier corps en forme de barre (47).

13. Outil selon la revendication 12, **caractérisé en ce qu'**un fourreau (60) est fixé extérieurement à l'extrémité (53) dudit deuxième corps en forme de barre (49) et agit en tant que butée pour ledit ensemble de support de rotation (56).

14. Outil selon une ou plusieurs des revendications 10 à 13, **caractérisé en ce que** lesdits moyens pour empêcher la flexion de l'arbre de transmission (44) lors de la rotation comprennent au moins une roue libre (61), qui est agencée entre ledit deuxième corps en forme de barre (49) et ledit deuxième élément tubulaire (46), un anneau externe (62) et un anneau interne (63) étant associés à ladite au moins une roue libre (61), ledit anneau externe (62) étant fixe par rapport audit deuxième élément tubulaire (46), ledit anneau interne (63) étant claveté sur ledit deuxième corps en forme de barre (49).

15. Outil selon une ou plusieurs des revendications 9 à 14, **caractérisé en ce qu'**une douille (68) pour distancer ledit premier élément tubulaire (45) et ledit deuxième élément tubulaire (46) est présente au niveau de l'extrémité dudit deuxième élément tubulaire qui se trouve à l'intérieur dudit premier élément tubulaire (45).

16. Outil selon une ou plusieurs des revendications 9 à 15, **caractérisé en ce que** lesdits moyens de liaison (37) comprennent trois éléments annulaires mutuellement associés, un premier (70) desdits trois éléments annulaires étant couplé de façon rigide audit premier élément tubulaire (45), un deuxième (71) desdits éléments annulaires agissant comme un couplage fileté entre ledit premier élément annulaire (70) et le troisième élément annulaire (72), qui est couplé de façon coulissante sur ledit deuxième élément tubulaire (46), ledit premier élément annulaire (70) étant fileté intérieurement afin de se coupler audit deuxième élément annulaire (71) qui vient en prise au moyen d'un filetage avec ledit troisième élément annulaire (72), qui entoure une partie dudit deuxième élément tubulaire (46), un anneau (74) réalisé en un matériau élastomère et pourvu d'extrémités tronconiques étant agencé intérieurement entre ledit deuxième élément annulaire (71) et ledit troisième élément annulaire (72).

17. Outil selon une ou plusieurs des revendications 10 à 16, **caractérisé en ce que** ledit deuxième corps en forme de barre (49) est fixé au niveau d'une extrémité d'un deuxième manchon de liaison (50), qui est claveté de façon rotative sur les parois internes dudit deuxième élément tubulaire (46), une queue (52) pour fixer le pignon (42) dudit engrenage conique (40) étant fixée au niveau de l'extrémité dudit deuxième manchon de liaison (50).

18. Outil selon un ou plusieurs des revendications précédentes, **caractérisé en ce que** ledit moteur d'entraînement électrique (17) a une source d'énergie autonome.

19. Outil selon la revendication 18, **caractérisé en ce que** ladite source d'énergie autonome est une batterie à 12 ou 24 volts.

20. Outil selon la revendication 7, **caractérisé en ce que** ledit moteur d'entraînement électrique (17) est enfermé dans une enceinte (75) agencée au niveau de l'extrémité de ladite perche de manoeuvre (16), un levier d'actionnement (76) pour ledit moteur d'entraînement électrique **(1 7)** étant associé à ladite enceinte (75), ledit levier étant relié de façon fonctionnelle à un microcontacteur pour le contact fermé et ouvert dudit moteur d'entraînement électrique (17).
